# EUROPEAN PATENT APPLICATION

(11) **EP 4 818 637 A1**
(43) Date of publication of application: **07.10.2026**
(21) Application number: 24895451.3
(22) Date of filing: 21.05.2024
(51) Int. Cl.: G01B 11/22

(54) **TIRE TREAD MEASUREMENT SYSTEM AND MEASUREMENT METHOD**

(30) Priority: 28.11.2023 CN 202311599274
(71) Applicant: Shenzhen Smartsafe Tech Co., Ltd., Shenzhen, Guangdong 518000 (CN)
(72) Inventor: ZHAN, Wei, Shenzhen, Guangdong 518000 (CN); XU, Xinwei, Shenzhen, Guangdong 518000 (CN)
(74) Representative: Murgitroyd & Company
(86) International application number: PCT/CN2024/094412
(87) International publication number: WO 2025/112341

(57) **Abstract**

Disclosed are a tread pattern detection system and a detection method therefor. The system includes: a handheld housing; a detection housing connected to the handheld housing, a length direction of the detection housing being opposite and spaced from the length direction of the handheld housing; a positioning assembly including a fixing plate, the fixing plate being connected to an end portion of the detection housing, the length direction of the fixing plate being perpendicular to the length direction of the detection housing; a measuring unit arranged at an end of the detection housing away from the fixing plate; the measuring unit includes a laser emitter and an image collector, the laser emitter is configured to emit laser rays perpendicular to the length direction of the detection housing, the image collector is configured to capture laser ray images formed by the laser rays on a plurality of tread patterns. According to the present invention, groove depths of a plurality of tread patterns can be measured synchronously, and thus the detection efficiency is greatly improved.

## Description

The present application claims priority of Chinese patent application 202311599274.2 on September 28, 2023, which is incorporated by reference in its entirety.

### TECHNICAL FIELD

The present application relates to the technical field of tread pattern detection, and particularly relates to a tread pattern detection system and a detection method therefor.

### BACKGROUND

A tread pattern detection system is a system used for detecting wear of surface patterns of tires, and it can help users promptly identify tire wear, prevent potential safety hazards, and provide related recommendations for repair.

Existing tread pattern detection systems can only measure the depth of grooves in one tread pattern at once, resulting in low detection efficiency.

### SUMMARY

To overcome the defects in the existing technology, the present application provides a tread pattern detection system and a detection method therefor, which can measure depths of grooves in a plurality of tread patterns at once so as to improve the detection efficiency.

In order to achieve above purpose, the following technical solution is adopted in the present application:
in a first aspect, the present application provides the tread pattern detection system, which includes:
a handheld housing;
a detection housing which is connected to the handheld housing, a length direction of the detection housing being opposite and spaced from the length direction of the handheld housing;
a positioning assembly which includes a fixing plate, the fixing plate being connected to an end portion of the detection housing, and the length direction of the fixing plate being perpendicular to the length direction of the detection housing;
a measuring unit which is arranged at an end of the detection housing away from the fixing plate;
the measuring unit includes a laser emitter and an image collector, the laser emitter is configured to emit laser rays perpendicular to the length direction of the detection housing, and the image collector is configured to capture laser ray images formed by the laser rays on a plurality of tread patterns.

Further, the length directions of the laser rays are parallel to the length direction of the fixing plate.

Further, the detection housing includes a straight housing part, and a side housing part which extends laterally along the end of the straight housing part away from the fixing plate; an extending direction of the side housing part is perpendicular to the length direction of the fixing plate; and the laser emitter and the image collector are mounted on the side housing part.

Further, the laser emitter and the image collector are arranged side by side along the extending direction of the side housing part, the image collector is arranged on the side close to the straight housing part, and the laser emitter is arranged on the side away from the straight housing part.

Further, the handheld housing includes a handheld part, and an adapting part which is arranged at an included angle with the handheld part; and the detection housing is connected to the adapting part at an included angle.

Further, the adapting part is provided with a sleeve; and the end of the detection housing close to the fixing plate is provided with a connecting column which is clamped in the sleeve.

Further, the fixing plate includes a first abutting part which is abutted against one side of an exterior of a groove in a tread pattern to be detected, a second abutting part which is abutted against the other side of the exterior of the groove in the tread pattern to be detected, and a connecting part which is used for fixing the first abutting part and the second abutting part and corresponds to the groove in the tread pattern to be detected.

Further, the first abutting part and/or the second abutting part are/is provided with an accommodating groove in which a magnetic element is arranged.

Further, the positioning assembly further includes a connecting rod; and one end of the connecting rod is connected to the fixing plate while the other end thereof is connected to the detection housing.

In a second aspect, the present application provides the detection method for the above tread pattern detection system, and the detection method includes the following steps:
enabling the fixing plate to abut against the surface of a tread pattern to be detected;
emitting the laser rays perpendicular to the length direction of the detection housing to the surface of the tread pattern to be detected by the laser emitter;
capturing the laser ray images formed by the laser rays on a plurality of tread patterns by the image collector; and
analyzing the depth of the groove in the tread pattern to be detected according to the captured laser ray images.

Compared with the existing technology, the present application has the following beneficial effects: the tread pattern detection system includes: the handheld housing; the detection housing which is connected to the handheld housing, the length direction of the detection housing being opposite and spaced from the length direction of the handheld housing; the positioning assembly which includes the fixing plate, the fixing plate being connected to the end portion of the detection housing, and the length direction of the fixing plate being perpendicular to the length direction of the detection housing; and the measuring unit which is arranged at the end of the detection housing away from the fixing plate; the measuring unit includes the laser emitter and the image collector, the laser emitter is configured to emit the laser rays perpendicular to the length direction of the detection housing, and the image collector is configured to capture the laser ray images formed by the laser rays on the plurality of tread patterns. The laser emitter and the image collector are arranged at the end away from the fixing plate, and the laser rays emitted by the laser emitter are perpendicular to the length direction of the detection housing, such that the laser rays can always cover the plurality of tread patterns, and the laser ray images can be captured through the image collector, thereby realizing simultaneous measurement of the depths of the grooves in the plurality of tread patterns, and greatly improving the detection efficiency.

The above is only an overview of the technical solution of the present application. In order to clearly understand the technical means of the present application, it can be implemented in accordance with the contents of the specification. Moreover, to make the above and other objectives, features, and advantages of the present application more apparent and easier to understand, the following exemplary embodiments are specifically illustrated and described in detail.

### BRIEF DESCRIPTION OF THE DRAWINGS

In order to more clearly illustrate the technical solutions of the embodiments of the present application, the accompanying drawings required in the description of the embodiments will be briefly introduced below. Obviously, the accompanying drawings described below are some embodiments of the present application, and for those of ordinary skill in the art, other drawings can also be obtained based on these accompanying drawings without making any inventive efforts.
FIG. 1 is a schematic structural diagram of a tread pattern detection system according to an embodiment of the present application;
FIG. 2 is an exploded view of a tread pattern detection system according to an embodiment of the present application;
FIG. 3 is a schematic structural diagram of a handheld housing and a detection housing in a tread pattern detection system according to an embodiment of the present application;
FIG. 4 is an exploded view of a handheld housing and a detection housing in a tread pattern detection system according to an embodiment of the present application;
FIG. 5 is a schematic structural diagram of a detection housing in a tread pattern detection system according to an embodiment of the present application;
FIG. 6 is a schematic structural diagram of a positioning assembly in a tread pattern detection system according to an embodiment of the present application;
FIG. 7 is an exploded view of a positioning assembly in a tread pattern detection system according to an embodiment of the present application;
FIG. 8 is a schematic structural diagram of a fixing plate in a tread pattern detection system according to an embodiment of the present application;
FIG. 9 is a schematic structural diagram in another view of a fixing plate in a tread pattern detection system according to an embodiment of the present application;
FIG. 10 is a schematic diagram 1 of an optical path structure of a tread pattern detection system according to an embodiment of the present application; and
FIG. 11 is a schematic diagram 2 of an optical path structure of a tread pattern detection system according to an embodiment of the present application.

### DETAILED DESCRIPTION

The technical solutions of the present application will be clearly and completely described below in conjunction with specific embodiments of the present application. Obviously, the described embodiments are a part of the embodiments of the present application, not all the embodiments. Based on the embodiments in the present application, all other embodiments obtained by those skilled in the art without making any creative efforts fall within the protection scope of the present application.

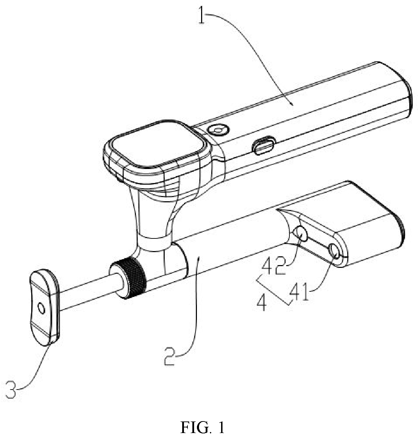

As shown in FIG. 1 to FIG. 2, the embodiment of the present application provides a tread pattern detection system, which includes a handheld housing 1, a detection housing 2, a positioning assembly 3, and a measuring unit 4; the detection housing 2 is connected to the handheld housing 1, and the length direction of the detection housing 2 is opposite and spaced from the length direction of the handheld housing 1. The positioning assembly 3 includes a fixing plate 31, the fixing plate 31 is connected to an end portion of the detection housing 2, and the length direction of the fixing plate 31 is perpendicular to the length direction of the detection housing 2. The measuring unit 4 is arranged at the end of the detection housing 2 away from the fixing plate 31; and the measuring unit 4 includes a laser emitter 41 and an image collector 42, the laser emitter 41 is configured to emit laser rays 100 perpendicular to the length direction of the detection housing 2, and the image collector 42 that is a camera is configured to capture laser ray images formed by the laser rays 100 on a plurality of tread patterns.

The laser emitter 41 and the image collector 42 are arranged at the end away from the fixing plate 31, and the laser rays 100 emitted by the laser emitter 41 are perpendicular to the length direction of the detection housing 2, such that the laser rays 100 can always cover the plurality of tread patterns, and the laser ray images can be captured through the image collector 42, thereby realizing simultaneous measurement of the depths of grooves in the plurality of tread patterns, and greatly improving the detection efficiency.

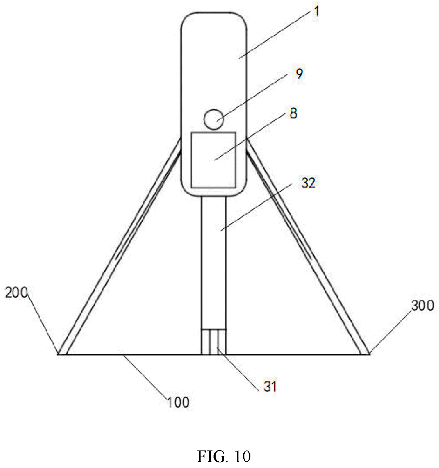

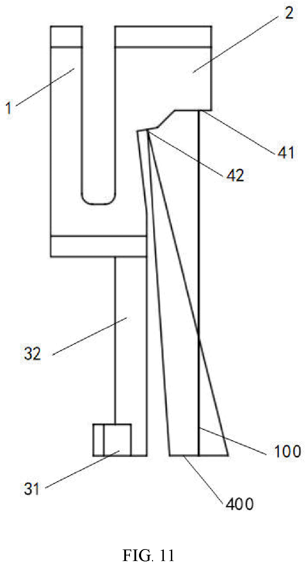

In order to more clearly understand the way of the tread pattern detection system to measure the depths of the grooves in the plurality of tread patterns simultaneously, as shown in FIG. 10, in actual use, the fixing plate 31 is abutted against the surfaces of the tread patterns, the laser emitter 41 emits the laser rays 100 perpendicular to the length direction of the detection housing 2, and the lengths of the laser rays 100 gradually increase from near to far; as the laser rays 100 reach the surfaces of the tread patterns, a laser line between a left end point 200 and a right end point 300 of the laser rays are parallel to a width direction of the tire, thus the laser rays 100 can always cover the plurality of tread patterns. As shown in FIG. 11, according to a shooting angle 400 of the image collector shown in FIG. 11, the image collector 42 is capable of completely capturing the laser ray images formed on the plurality of tread patterns, and then the depths of the grooves in the tread patterns can be analyzed according to the laser ray images, specifically, the laser ray images are preprocessed, such as denoising and contrast enhancement, thus improving the accuracy of subsequent image analysis; then the laser rays 100 and the tread patterns are segmented and extracted by an image processing technology to form binary images of the tread patterns; and finally, the morphological information of the tread patterns in the binary images is analyzed to compute the depths of the grooves in the tread patterns. Common methods include contour analysis, edge detection, morphological operation, and the like. It is to be noted that after the image collector 42 captures the laser image images formed on the plurality of tread patterns, the depths of the grooves in the tread patterns can be obtained by the common analysis method in the existing technology; and the analysis method is not limited in the present application.

As shown in FIG. 10, the length directions of the laser rays 100 are parallel to the length direction of the fixing plate 31. By means of such design, the laser rays 100 emitted by the laser emitter 41 can avoid the fixing plate 31, thereby preventing the laser rays 100 from being shielded by the fixing plate 31.

As shown in FIG. 1 to FIG. 4, the detection housing 2 includes a straight housing part 21, and a side housing part 22 which extends laterally along the end of the straight housing part 21 away from the fixing plate 31; the extending direction of the side housing part 22 is perpendicular to the length direction of the fixing plate 31; and the laser emitter 41 and the image collector 42 are mounted on the side housing part 22.

Specifically, a mounting cavity is formed inside the side housing part 22, and a bracket is fixed in the mounting cavity; the laser emitter 41 and the image collector 42 are fixedly mounted on the side housing part 22 by the bracket; and as the side housing part 22 is arranged on the side of the straight housing part 21, the interference to the laser rays 100 emitted by the laser emitter 41, as well as the interference to the image collector 42 to normally capture the laser ray images due to the blockage of the straight housing part 21 can be avoided.

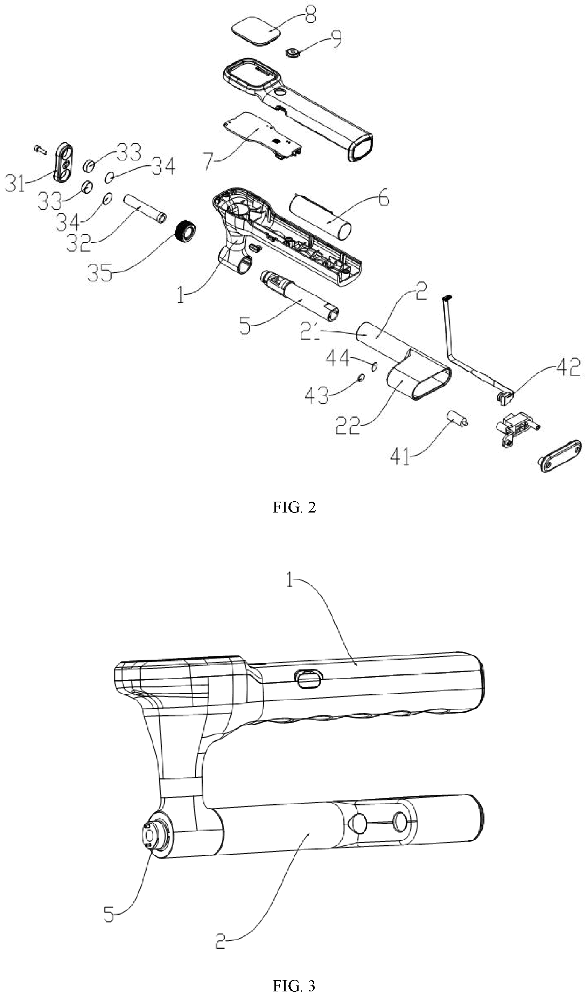

As shown in FIG. 2, in one embodiment, a laser emitter lens 43 corresponding to the laser emitter 41 and an image collector lens 44 corresponding to the image collector 42 are arranged on the side housing part 22; the laser emitter lens 43 is configured to adjust the emitting direction of the laser rays 100; and the image collector lens 44 is configured to adjust the image collection range of the image collector 42.

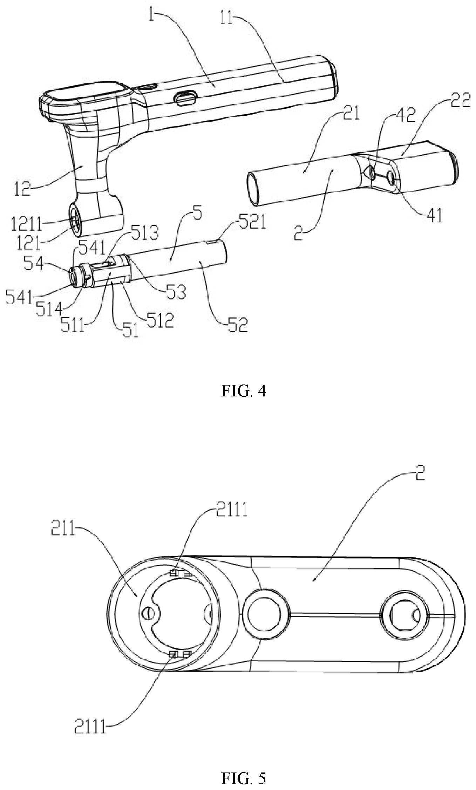

As shown in FIG. 4, the laser emitter 41 and the image collector 42 are arranged side by side along the extending direction of the side housing part 22, the image collector 42 is arranged on the side close to the straight housing part 21, and the laser emitter 41 is arranged on the side away from the straight housing part 21. Such design is conducive to the emitting of the laser rays 100 from the laser emitter 41, as well as the capture of the laser ray images by the image collector 42. Definitely, in other embodiments, the laser emitter 41 can be arranged on the side close to the straight housing part 21, and the image collector 42 can be arranged on the side away from the straight housing part 21.

As shown in FIG. 2, in one embodiment, the measuring unit 4 further includes a control panel 7 which is electrically connected to the laser emitter 41 and the image collector 42, and the control panel 7 is arranged in the handheld housing 1 and configured to control the laser emitter 41 and analyze the laser ray images captured by the image collector 42. The control panel 7 is electrically connected to the laser emitter 41 and the image collector 42 through wires, thus the number of electronic components of the detection housing 2 can be decreased, the size of the detection housing 2 can be reduced, and the detection housing 2 can be smaller.

As shown in FIG. 2, in one embodiment, the measuring unit 4 further includes a display screen 8 and a battery 6 which are electrically connected to the control panel 7; the display screen 8 is arranged on the surface of the handheld housing 1, and the battery 6 is accommodated in the handheld housing 1. The display screen 8 is configured to display detection information. Preferably, the display screen 8 is arranged on the surface of the handheld housing 1 away from the detection housing 2, such that detection personnel can observe the detection information more easily. Preferably, the battery 6 is accommodated in the handheld housing 1, and thus the size of the detection housing 2 can be further reduced.

As shown in FIG. 2, in one embodiment, the measuring unit 4 further includes a power switch 9 which is electrically connected to the control panel 7, and the power switch 9 is arranged on the surface of the handheld housing 1 away from the detection housing 2, namely, the power switch 9 and the display screen 8 are on the same plane, which facilitates the operation of the detection personnel. If the power switch 9 is in an On state, the laser emitter 41 and the image collector 42 enter a working state, at the moment, the laser emitter 41 can emit the laser rays 100, the laser rays 100 irradiate the surface of the tire to form the laser ray images, and the image collector 42 can capture the laser ray images.

As shown in FIG. 4, the handheld housing 1 includes a handheld part 11, and an adapting part 12 which is arranged at an included angle with the handheld part 11; and the detection housing 2 is connected to the adapting part 12 at an included angle. As the handheld part 11 of the handheld housing 1 is arranged at the included angle with the adapting part 12, and the adapting part 12 is connected to the detection housing 2 at the included angle, in this embodiment, the included angle between the handheld part 11 and the adapting part 12 is 90°, and the included angle between the adapting part 12 and the detection housing 2 is also 90°, that is, after the handheld housing 1 and the detection housing 2 are connected as a whole and form a two-section structure, the detection housing 2 is short, and thus the tread pattern detection system can extend into a gap between a vehicle bumper and the ground at a relatively small angle to the ground to perform detection on the depths of the grooves in the tread patterns; therefore, it can be applied to an application scene with a low vehicle chassis, and the applicability of the tread pattern detection system is improved.

The handheld housing 1 and the detection housing 2 are connected to form a U-shaped structure; during use, the detection personnel holds the handheld part 11, the detection housing 2 is on the side of the hand of the detection personnel, and it can extend into the gap between the vehicle bumper and the ground at a relatively small angle to the ground, thus facilitating the detection personnel to apply a force to the detection housing 2, improving the stability of the fixing plate 31 abutting against the surfaces of the tread patterns, and avoiding the problem of inclination of the fixing plate 31.

Preferably, the handheld part 11 and the adapting part 12 are of an integrally formed structure, which facilitates manufacturing and processing.

Preferably, the length direction of the handheld part 11 is parallel to the length direction of the detection housing 2; by means of such design, after the detection personnel holds the handheld part 11 and applies the acting force that is parallel to the length direction of the handheld part 11 to the handheld part 11, the acting force is transferred to the detection housing 2 from the handheld part 11 and then transferred to the fixing plate 31, such that the detection personnel can determine the direction of the applied force conveniently, the possibility of inclination of the fixing plate 31 during tread pattern detection can be reduced, and the detection accuracy can be improved; and moreover, it is suitable for a vehicle with smaller gap between bumper and the ground, namely, a vehicle with a lower vehicle chassis. It is to be noted that the length direction of the handheld part 11 and the length direction of the detection housing 2 can be arranged at a certain included angle, for example, the included angle between the length direction of the handheld part 11 and the length direction of the detection housing 2 is 15°, 25° and the like.

As shown in FIG. 3 to FIG. 4, the adapting part 12 is provided with a sleeve 121; and the end of the detection housing 2 close to the fixing plate 31 is provided with a connecting column 5 which is clamped in the sleeve 121. By means of the clamped mode, relative motion between the detection housing 2 and the handheld housing 1 can be avoided, thus ensuring the stability after connection.

As shown in FIG. 2 to FIG. 5, the connecting column 5 includes a first embedding section 51 and a second embedding section 52; a limiting step 53 is formed between the first embedding section 51 and the second embedding section 52; the first embedding section 51 is clamped in the sleeve 121; a rear end surface of the sleeve 121 and the limiting step 53 limit the mounting direction of the connecting column 5; the second embedding section 52 is clamped into a sleeve hole 211 in the straight housing part 21; and a front end surface of the sleeve hole 211 and the limiting step 53 limit the mounting direction of the detection housing 2.

During mounting, a front end of the first embedding section 51 of the connecting column 5 is inserted from a rear end of the sleeve 121; after the limiting step 53 that is inserted into the connecting column 5 is abutted against the rear end surface of the sleeve 121, the limitation to the mounting direction between the connecting column 5 and the handheld housing 1 is achieved, then the rear end of the second embedding section 52 of the connecting column 5 is inserted from the front end of the sleeve hole 211; and after the limiting step 53 that is inserted into the connecting column 5 is abutted against the front end surface of the sleeve hole 211, the limitation to the mounting direction between the connecting column 5 and the detection housing 2 is achieved; and meanwhile, the first embedding section 51 and the sleeve 121, as well as the second embedding section 52 and the sleeve hole 211, are connected in the clamped mode, which prevents the handheld housing 1 and the detection housing 2 from circumferential rotating relative to the connecting column 5, thereby avoiding the problem that the handheld housing 1 and the detection housing 2 move relatively during use.

As shown in FIG. 4, at least one part of an inner wall of the sleeve 121 is a concave surface, and at least another part is a convex surface; at least one part of an outer surface of the first embedding section 51 is a concave surface, and at least another part is a convex surface; and after the first embedding section 51 is mounted in the sleeve 121, the concave surface 511 of the first embedding section corresponds to the convex surface of the sleeve 121, and the convex surface 512 of the first embedding section corresponds to the concave surface of the sleeve. By means of such design, circumferential rotation between the handheld housing 1 and the connecting column 5 can be avoided. It is to be noted that the number of the concave surfaces and the number of the convex surfaces on the sleeve 121 and the first embedding section 51 can be determined according to actual requirements; in this embodiment, the inner wall of the sleeve 121 is provided with two convex surfaces, arranged opposite each other, with the rest being concave surfaces; and the outer surface of the first embedding section 51 is provided with two concave surfaces arranged opposite each other.

As shown in FIG. 4, the outer surface of the first embedding section 51 is provided with at least one neck 514; and clamping protrusions 1211 matched with the necks 514 in a clamped mode are arranged in the sleeve 121. By means of such design, the circumferential rotation between the handheld housing 1 and the connecting column 5 can be further avoided; moreover, and the clamping protrusions 1211 and the necks 514 are subjected to interference fitting, so that the connection stability can be improved, and looseness at the joint can be avoided. In this embodiment, two necks 514 are oppositely arranged on the outer surface of the first embedding section 51, and two clamping protrusions 1211 matched with the two necks 514 are oppositely arranged in the sleeve 121; definitely, in other embodiments, the number of the clamping protrusions 1211 and the necks 514 can be adaptively adjusted.

As shown in FIG. 4, the opening direction of the necks 514 is the same as the mounting direction of the first embedding section 51. By means of such design, the clamping protrusions 1211 can be directly clamped into the necks 514 along the mounting direction of the first embedding section 51 of the connecting column 5 during mounting, thus facilitating mounting.

As shown in FIG. 4, the outer surface of the second embedding section 52 is provided with at least one notch 521; the sleeve hole 211 is provided with locking blocks 2111 at positions corresponding to the notches 521; after the second embedding section 52 is mounted in the sleeve hole 211, the locking blocks 2111 are abutted between the notches 521 and the inner wall of the sleeve hole 211; by mean of such design, relative circumferential rotation between the connecting column 5 and the detection housing 2 can be avoided, and moreover, and a certain pre-tightening force is generated between the connecting column 5 and the detection housing 2. In addition, after being mounted in the sleeve hole 211, the second embedding section 52 is locked in the sleeve hole 211 by fasteners such as screws.

In some embodiments, the locking blocks 2111 can be inclined to facilitate insertion and to generate the pre-tightening force after mounting.

In this embodiment, the notches 521 are arranged at the end of the second embedding section 52 away from the first embedding section 51; and the second embedding section 52 is provided with two notches 521 oppositely, thus improving the stability after connection.

As shown in FIG. 4, in one embodiment, the first embedding section 51 and the second embedding section 52 are both provided with central through holes (not shown in the figure) which are in communication with each other; one side of the first embedding section 51 is provided with a window 513; the sleeve 121 is provided with a via hole at a position corresponding to the window 513; and the via hole, the window 513, and the central through holes of the first embedding section 51 and the second embedding section 52 form a wiring channel. By means of such design, the space is reasonably utilized, and hidden wiring between the handheld housing 1 and the detection housing 2 is achieved.

As shown in FIG. 2, FIG. 6 to FIG. 7, the positioning assembly 3 further includes a connecting rod 32; and one end of the connecting rod 32 is connected to the fixing plate 31 while the other end thereof is connected to the detection housing 2.

Specifically, at least two first positioning holes 321 are formed in an end surface of the other end of the connecting rod 32; the end of the first embedding section 51 away from the second embedding section 52 extends to form a penetrating-out part 54; at least two second positioning holes 541 are formed in the end surface of the penetrating-out part 54; and positioning pins are inserted in the first positioning holes 321 and the second positioning holes 541 which are arranged correspondingly. The first positioning holes 321 and the second positioning holes 541 can be circular or square, correspondingly, the positioning pins are matched with the first positioning holes 321 and the second positioning holes 541 by shape; and it is to be understood that the sum of the depths of the first positioning holes 321 and the second positioning holes 541 is less than or equal to the lengths of the positioning pins. In this embodiment, the first positioning holes 321 and the second positioning holes 541 are circular, and the sum of the depths of the first positioning holes 321 and the second positioning holes 541 is equal to the lengths of the positioning pins.

The at least two first positioning holes 321 are formed in the connecting rod 32, the at least two second positioning holes 541 are formed in the penetrating-out part 54, and the positioning pins are matched with the first positioning holes 321 and the second positioning holes 541 in an inserting manner, such that the stability of connection between the connecting rod 32 and the detection housing 2 can be guaranteed, and looseness at the joint is avoided.

As shown in FIG. 4, in this embodiment, the connecting rod 32 is provided with the two first positioning holes 321, and the penetrating-out part 54 is also provided with two positioning holes; two positioning pins are inserted into the two first positioning holes 321 and the two second positioning holes 541 which are oppositely arranged, the two first positioning holes 321 are symmetrically arranged relative to the center of the connecting rod 32, and the two second positioning holes 541 are symmetrically arranged relative to the center of the connecting column 5; by means of such design, the positioning fit between the connecting rod 32 and the penetrating-out part 54 can be guaranteed under the condition that the number of the positioning pins used is decreased as much as possible, and meanwhile, the connecting rod 32 and the detection housing 2 can be prevented from relative circumferential rotation. Definitely, in other embodiments, three or more first positioning holes 321 and a corresponding number of second positioning holes 541 can be arranged, and a corresponding number of positioning pins are used for positioning fitting.

In one embodiment, the connecting rod 32 is movably sleeved with a rotating ring 35, an internal thread (not shown in the figure) is formed in the inner wall of the rotating ring 35, and an external thread (not shown in the figure) matched with the internal thread is formed in the outer surface of the penetrating-out part 54. By means of the threaded connection mode, the connecting rod 32 and the detection housing 2 can be disassembled and assembled conveniently, moreover, the stability after connection can be improved, and looseness at the joint is prevented.

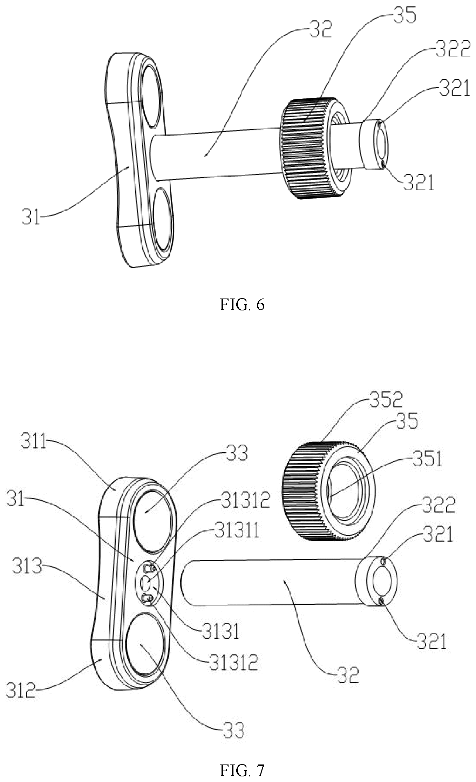

As shown in FIG. 6 to FIG. 7, the outer surface of the end of the connecting rod 32 away from the fixing plate 31 extends outwards in the radial direction to form an annular flange part 322, and the inner wall of the rotating ring 35 extends towards the center to form an annular limiting part 351 which is abutted against the annular flange part 322. By virtue of the annular flange part 322 and the annular limiting part 351, the rotating ring 35 can be prevented from being separated from the end of the connecting rod 32 away from the fixing plate 31, thus achieving a mutual limiting effect.

As shown in FIG. 7, antiskid stripes 352 are arranged on the surface of the outer wall of the rotating ring 35, which increase the friction force in rotation, thus facilitating the rotation of the rotating ring 35, and facilitating a user to operate.

As shown in FIG. 6 to FIG. 9, the fixing plate 31 includes a first abutting part 311 which is abutted against one side of the exterior of the groove in the tread pattern to be detected, a second abutting part 312 which is abutted against the other side of the exterior of the groove in the tread pattern to be detected, and a connecting part 313 used for fixing the first abutting part 311 and the second abutting part 312; and the first abutting part 311, the second abutting part 312, and the connecting part 313 can be of an integrated structure or a split structure. The connecting part 313 corresponds to the groove in the tread pattern to be detected, namely, in a measurement state, the fixing plate 31 stretches across the groove in the tread pattern to be detected.

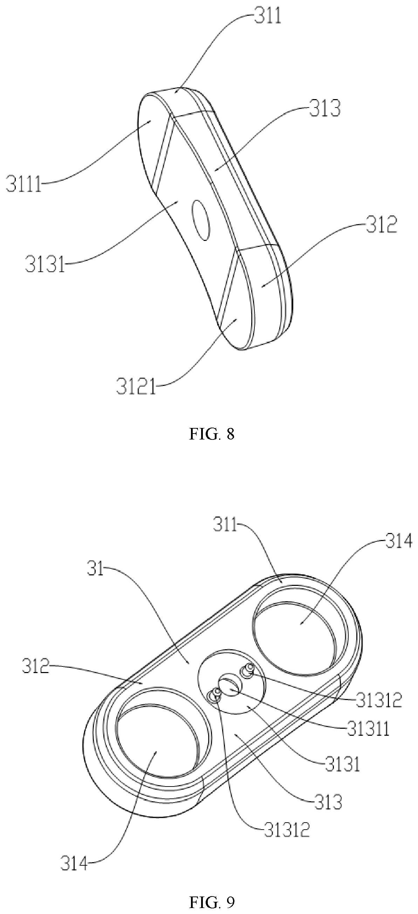

Further, the first abutting part 311 and/or the second abutting part 312 are/is provided with an accommodating groove 314, and a magnetic element 33 such as a magnet is arranged in the accommodating groove 314. As shown in FIG. 9, in this embodiment, the upper surfaces of both the first abutting part 311 and the second abutting part 312 are provided with the circular accommodating grooves 314, and the circular magnetic elements 33 are placed in the two accommodating grooves 314; by means of such design, the magnetism of the fixing plate 31 is increased in a limited space, so that the contact stability is improved during measurement or calibration. It is to be understood that in other embodiments, the accommodating grooves 314 can be formed in the lower surfaces (namely the surfaces abutting against the tire to be detected) of the first abutting part 311 and the second abutting part 312, or the accommodating grooves 314 can be formed in the side surfaces of the first abutting part 311 and the second abutting part 312.

The magnetic element 33 is arranged on the fixing plate 31; therefore, during measurement, after the fixing plate 31 is in contact with the tire, a pre-fixing effect is achieved between the fixing plate 31 and the tire because a metal element is arranged in the tire, thereby ensuring the stability of the fixing plate 31 during measurement; in addition, during calibration, a calibration device is provided with a magnetic attraction member, so that the fixing plate 31 can be stably connected to the calibration device through the magnetic attraction force of the magnetic element 33, human deviation can be avoided during the calibration process, and the operation is more labor-saving.

In order to prevent the magnetic element 33 from easily falling off from the accommodating groove 314, preferably, the magnetic element 33 is bonded and fixed in the accommodating groove 314 by adhesives such as glue.

In one embodiment, as shown in FIG. 2 and FIG. 9, a cover plate 34 is arranged in the accommodating groove 314, and the cover plate 34 covers the upper portion of the magnetic element 33. The cover plate 34 is adapted to the accommodating groove 314 by shape, and the cover plate 34 can be made of a flexible material or a hard material, such as rubber, and acrylic material; and in order to prevent the problem of easy falling, the cover plate 34 is bonded and fixed in the accommodating groove 314 by the adhesives such glue. For aesthetic property, after the cover plate 34 is mounted, the upper surface of the cover plate 34 and the upper surface of the fixing plate 31 are on the same horizontal plane.

As shown in FIG. 7 to FIG. 9, the surface of the first abutting part 311 abutting against one side of the exterior of the groove in the tread pattern to be detected is a first abutting surface 3111, the surface of the second abutting part 312 abutting against the other side of the exterior of the groove in the tread pattern to be detected is a second abutting surface 3121, and both the first abutting surface 3111 and the second abutting surface 3121 are flat surfaces. The surface of the connecting part 313 located on the same side with the first abutting surface 3111 and the second abutting surface 3121 is an inner concave surface, and the inner concave surface is concaved in a direction away from the groove in the tread pattern to be detected. During measurement, the inner concave surface can avoid a concave-convex part on the surface of the tread pattern, and meanwhile, the first abutting surface 3111 and the second abutting surface 3121 can be tightly abutted against the surfaces of both sides of the groove in the tread pattern to be detected; by means of such design, the contact area with the surface of the tread pattern can be increased, the influence of the concave-convex part on the surface of the tread pattern on the fixing plate 31 can be reduced, moreover, the tight abutting between the fixing plate 31 and the surface of the tread pattern is ensured, the possibility of inclination of the fixing plate 31 is reduced, and the contact stability during measurement is improved.

As shown in FIG. 7 to FIG. 9, a fixing groove 3131 is formed in the side of the connecting part 313 away from the groove in the tread pattern, and the end of the connecting rod 32 close to the fixing plate 31 is embedded and fixed in the fixing groove 3131. A first threaded hole 31311 is formed in the fixing groove 3131, a second threaded hole is formed in the end surface of the end of the connecting rod 32 close to the fixing plate 31, the connecting rod 32 and the fixing plate 31 are locked and fixed through the fasteners that are connected in the first threaded hole 31311 and the second threaded hole (not shown in the figure), and the fasteners have at least threaded parts that can be common screws, screw rods, and the like. By means of such design, the disassembling and assembling can be conveniently carried out, and the stability after connection is improved.

In order to prevent the tightened ends of the fasteners from protruding out of the inner concave surface after fastening to affect the normal use of the fixing plate 31, a step part is arranged in the first threaded hole 31311, and the step part divides the first threaded hole 31311 into an inner hole part and an outer hole part; and after fastening by the fasteners, the tightened end of the fastener is in the outer hole part.

As shown in FIG. 7 to FIG. 9, at least two positioning protrusions 31312 are further arranged in the fixing groove 3131, and positioning holes (not shown in the figure) in positioning fitting with the positioning protrusions 31312 are further formed in the end surface of the end of the connecting rod 32 close to the fixing plate 31. By means of such design, the relative circumferential motion between the fixing plate 31 and the connecting rod 32 after connection can be prevented, thus further improving the stability after connection. It is to be understood that the number of the positioning protrusions 31312 can be selected according to actual conditions, for example, three or four positioning protrusions can be arranged, and definitely, the number of the positioning holes is consistent with that of the positioning protrusions 31312.

The embodiment of the present application also provides a detection method based on the above tread pattern detection system, and the method includes the following steps:
S10, abutting the fixing plate against the surface of the tread pattern to be detected;
S20, emitting the laser rays perpendicular to the length direction of the detection housing to the surface of the tread pattern to be detected by the laser emitter;
S30, capturing the laser ray images formed by the laser rays on a plurality of tread patterns by the image collector; and
S40, analyzing the depth of the groove in the tread pattern to be detected according to the captured laser ray images.

By means of the above detection method, the depths of the grooves in the plurality of tread patterns can be detected synchronously at once, so that the detection efficiency is greatly improved. In addition, the handheld housing and the detection housing are connected as a whole and form the two-section structure, the detection housing is short, and thus the tread pattern detection system can extend into the gap between the vehicle bumper and the ground at a relatively small angle to the ground to perform detection on the depths of the grooves in the tread patterns; therefore, it can be applied to an application scene with a low vehicle chassis, and the applicability of the tread pattern detection system is improved.

The above are only specific embodiments of the present application, but the protection scope of the present application is not limited thereto. Any skilled person in the technical field can easily conceive various equivalent modifications or substitutions within the technical scope disclosed in the present application, and these modifications or substitutions should all be covered within the protection scope of the present application. Therefore, the scope of protection of the present application shall be subject to the scope of the claims.

## Claims

1. A tread pattern detection system, comprising:
a handheld housing;
a detection housing which is connected to the handheld housing, a length direction of the detection housing being opposite and spaced from the length direction of the handheld housing;
a positioning assembly which comprises a fixing plate, the fixing plate being connected to an end portion of the detection housing, and the length direction of the fixing plate being perpendicular to the length direction of the detection housing;
a measuring unit which is arranged at an end of the detection housing away from the fixing plate;
the measuring unit comprises a laser emitter and an image collector, the laser emitter is configured to emit laser rays perpendicular to the length direction of the detection housing, and the image collector is configured to capture laser ray images formed by the laser rays on a plurality of tread patterns.

2. The tread pattern detection system according to claim 1, wherein the length directions of the laser rays are parallel to the length direction of the fixing plate.

3. The tread pattern detection system according to claim 1, wherein the detection housing comprises a straight housing part, and a side housing part which extends laterally along the end of the straight housing part away from the fixing plate; an extending direction of the side housing part is perpendicular to the length direction of the fixing plate; and the laser emitter and the image collector are mounted on the side housing part.

4. The tread pattern detection system according to claim 3, wherein the laser emitter and the image collector are arranged side by side along the extending direction of the side housing part, the image collector is arranged on the side close to the straight housing part, and the laser emitter is arranged on the side away from the straight housing part.

5. The tread pattern detection system according to claim 1, wherein the handheld housing comprises a handheld part, and an adapting part which is arranged at an included angle with the handheld part, and the detection housing is connected to the adapting part at an included angle.

6. The tread pattern detection system according to claim 5, wherein the adapting part is provided with a sleeve; and the end of the detection housing close to the fixing plate is provided with a connecting column which is clamped in the sleeve.

7. The tread pattern detection system according to claim 1, wherein the fixing plate comprises a first abutting part which is abutted against one side of an exterior of a groove in a tread pattern to be detected, a second abutting part which is abutted against the other side of the exterior of the groove in the tread pattern to be detected, and a connecting part which is used for fixing the first abutting part and the second abutting part and corresponds to the groove in the tread pattern to be detected.

8. The tread pattern detection system according to claim 7, wherein the first abutting part and/or the second abutting part are/is provided with an accommodating groove in which a magnetic element is arranged.

9. The tread pattern detection system according to claim 1, wherein the positioning assembly further comprises a connecting rod, and one end of the connecting rod is connected to the fixing plate while the other end thereof is connected to the detection housing.

10. A detection method, applied to the tread pattern detection system according to any one of claims 1 to 9, comprising:
enabling the fixing plate to abut against the surface of the tread pattern to be detected;
emitting the laser rays perpendicular to the length direction of the detection housing to the surface of the tread pattern to be detected by the laser emitter;
capturing the laser ray images formed by the laser rays on a plurality of tread patterns by the image collector; and
analyzing the depth of the groove in the tread pattern to be detected according to the captured laser ray images.
